# EUROPÄISCHE PATENTSCHRIFT

(11) **EP 3 870 461 B1**
(45) Veröffentlichungstag und Bekanntmachung des Hinweises auf die Patenterteilung: **03.05.2023**
(21) Anmeldenummer: 19762386.1
(22) Anmeldetag: 03.09.2019
(51) Int. Cl.: B60C 11/03, B60C 11/13

(54) **FAHRZEUGLUFTREIFEN**
PNEUMATIC VEHICLE TIRE
PNEUMATIQUE DE VÉHICULE

(30) Priorität: 23.10.2018 DE 102018218084
(43) Veröffentlichungstag der Anmeldung: 01.09.2021
(73) Patentinhaber: Continental Reifen Deutschland GmbH, 30165 Hannover (DE)
(72) Erfinder: TOMFORDE, Willem, 30165 Hannover (DE); BEHR, Ulrich, 30165 Hannover (DE)
(74) Vertreter: Continental Corporation
(86) Internationale Anmeldenummer: PCT/EP2019/073410
(87) Internationale Veröffentlichungsnummer: WO 2020/083546

(56) Entgegenhaltungen:
- EP-A1- 3 335 908
- DE-A1-102012 101 760
- DE-A1-102014 225 613
- US-A- 4 955 415

## Beschreibung

Die Erfindung betrifft einen Fahrzeugluftreifen mit einem Laufstreifen mit zumindest einem von einer Umfangsrille begrenzten schulterseitigen Profilband, in welchem vor der Umfangsrille endende Querrillen ausgebildet sind,
wobei die Umfangsrille einen Rillengrund aufweist und zum schulterseitigen Profilband durch eine laufstreifenaußenseitige Rillenflanke und eine das schulterseitige Profilband entlangverlaufende Rillenkante begrenzt ist, wobei die Rillenkante gemeinsam mit der laufstreifenaußenseitigen Rillenflanke im schulterseitigen Profilband in Umfangsrichtung langgestreckte und aufeinanderfolgende Einbuchtungen bildet und wobei die Rillenkante an den Einbuchtungen und in das Profilband hinein eine maximale axiale Auslenkung von 1,0 mm bis 7,0 mm aufweist.

Ein derartiger Fahrzeugluftreifen ist beispielsweise aus der DE 10 2014 225 613 A1 bekannt. Dieser Fahrzeugluftreifen weist ein schulterseitiges Profilband auf, welches mit Querrillen versehen und durch eine Umfangsrille begrenzt ist. Die Einbuchtungen im Profilband sind derart gestaltet, dass die Rillenkante in das Profilband hinein eine maximale Auslenkung von 2,0 mm bis 5,0 mm aufweist. Die Querrillen sind in zwei verschiedenen Erstreckungslängen vorgesehen, wobei längere Querrillen mit einer ersten Erstreckungslänge und kürzere Querrillen mit einer zweiten Erstreckungslänge in Umfangsrichtung abwechselnd aufeinanderfolgen. Die Einbuchtungen erstrecken sich in Umfangsrichtung jeweils im Wesentlichen über den Bereich zwischen in Umfangsrichtung benachbarten längeren Querrillen, wobei sich die maximale axiale Auslenkung der Randkante im Bereich der kürzeren Querrillen befindet. Durch diese Maßnahmen soll die Kraftübertragung des Reifens auf die Straße verbessert sein. Die Einbuchtungen sollen die durch die Querrillen bedingte ungleichmäßige Gummiverteilung im Profilband ausgleichen, wodurch das schulterseitige Profilband gleichmäßig abreiben soll. Ferner verkürzen die Einbuchtungen die Wasserableitwege im Profilband, wodurch der Laufstreifen beim Fahren auf nasser Fahrbahn auf effektivere Weise entwässert. Durch die Einbuchtungen "verliert" das Profilband jedoch an Gummimaterial, sodass die Kontaktfläche des Profilbandes zum Untergrund und die Steifigkeit des Profilbandes verringert sind, wodurch die Handlingeigenschaften, insbesondere das Ansprechverhalten auf Lenkkräfte, ungünstig beeinflusst werden. Dokument US4955415 offenbart einen weiteren relevanten Fahrzeugluftreifen.

Der Erfindung liegt daher die Aufgabe zugrunde, bei einem Fahrzeugluftreifen der eingangs genannten Art die Steifigkeit des schulterseitigen Profilbandes zu erhöhen, wobei kurze Wasserableitwege zur Umfangsrille erhalten bleiben sollen.

Gelöst wird die gestellte Aufgabe erfindungsgemäß durch einen Fahrzeugluftreifen gemäß Anspruch 1.

Gemäß der Erfindung weisen die Rillenflanken radial innerhalb der Laufstreifenperipherie befindliche, den Boden einer Einbuchtung und die Deckfläche der zugehörigen Ausbuchtung bildende Schrägflächen auf. Diese Schrägflächen stabilisieren und versteifen gemeinsam mit den Ausbuchtungen das Profilband. Die dadurch erhaltene speziell "geschwungene" Umfangsrille erhöht die Steifigkeit des schulterseitigen Profilbandes, wobei die Einbuchtungen weiterhin für kurze Wasserableitwege sorgen. Zusätzlich wird durch die Ausbuchtungen die Wahrscheinlichkeit des Verfangens von Steinen in der Umfangsrille verringert, sodass die Ausbuchtungen auch eine Wirkung als "Steinauswerfer" zeigen.

Die stabilisierende und versteifende Wirkung der Schrägflächen ist besonders ausgeprägt, wenn in einer bevorzugten Ausführungsvariante jede Schrägfläche, welche den Boden einer Einbuchtung und die Deckfläche der zugehörigen Ausbuchtung bildet, im Querschnitt betrachtet, zur radialen Richtung unter einem konstanten Winkel von 30° bis 60°, insbesondere von 40° bis 50°, und besonders bevorzugter Weise von 43° bis 47° verläuft.

Gemäß der Erfindung wird jede Schrägfläche, welche den Boden einer Einbuchtung und die Deckfläche der zugehörigen Ausbuchtung bildet, zu ihren in Umfangsrichtung liegenden Enden kontinuierlich schmäler, sodass die Schrägfläche gemeinsam mit der Einbuchtung und der Ausbuchtung ausläuft.

Gemäß einer weiteren bevorzugten Ausführungsvariante beträgt die maximale axiale Auslenkung der Rillenkante an den Einbuchtungen bis zu 5,0 mm. Die maximale Auslenkung beeinflusst dabei unmittelbar die "lokale axiale Breite" der Schrägfläche, da diese den Boden der Einbuchtung bildet. Durch diese Maßnahme wird einerseits der Wasserableitweg verkürzt und andererseits das schulterseitige Profilband gut stabilisiert. Es ist ferner bevorzugt, wenn jede Schrägfläche, welche den Boden einer Einbuchtung und die Deckfläche der zugehörigen Ausbuchtung bildet, rilleninnenseitig durch eine Kante begrenzt ist, welche in radialer Richtung in einer konstanten Tiefe von 60% bis 90%, insbesondere von mindestens 75%, der Profiltiefe verläuft. Dementsprechend befindet sich auch die Schrägfläche deutlich radial innerhalb der Laufstreifenperipherie, was sich vorteilhaft auf die stabilisierende Wirkung der Schrägfläche auf das schulterseitige Profilband auswirkt. Zusätzlich wird das Rillenleervolumen der Umfangsrille durch die Ausbuchtung erhöht, wodurch deren Wasserdrainagevermögen verbessert, also erhöht, ist. Gemäß einer weiteren bevorzugten Ausführungsvariante weist die Kante, welche jeweils eine Schrägfläche rilleninnenseitig begrenzt, bezogen auf eine durch ihre Enden verlaufende, von der Umfangsrichtung und der Radialrichtung aufgespannten Hilfsebene, in die Umfangsrille hinein eine maximale axiale Auslenkung von 1,0 mm bis 7,0 mm , vorzugsweise von bis zu 5,0 mm, auf. Auch durch diese Maßnahme wird auf die "lokale axiale Breite" der Schrägfläche und damit auf deren stabilisierende Wirkung auf das schulterseitige Profilband vorteilhaft Einfluss genommen. Die jeweils gewählte maximale axiale Auslenkung wird dabei insbesondere an das jeweilige schulterseitige Profilband angepasst, insbesondere an die Profilierung und/oder an die Breite des Profilbandes. Eine maximale Auslenkung von bis 5,0 mm in die Umfangsrille hinein ist insbesondere deshalb bevorzugt, da dadurch auch das Wasserdrainagevermögen der Umfangsrille erhalten bleibt.

Gemäß einer weiteren bevorzugten Variante weisen die Einbuchtung und die zugehörige Ausbuchtung in Umfangsrichtung übereinstimmende Erstreckungslängen von 60,0 mm bis 140,0 mm, vorzugsweise von 80,0 mm bis 120,0 mm, und besonders bevorzugter Weise von 75.0 mm bis 110,0 mm auf. Ein- bzw. Ausbuchtungen einer solchen Erstreckungslänge führen, insbesondere bedingt durch die entsprechend langen Schrägflächen, einerseits zu einer höheren Steifigkeit des Profilbandes, verkürzen die Wasserableitwege und lassen sich andererseits zusätzlich hervorragend an die üblicherweise vorgesehenen "Pitchlängen" des Laufstreifens anpassen.

Eine besonders gleichmäßige Stabilisierung des schulterseitigen Profilbandes wird erzielt, wenn jede Schrägfläche, welche den Boden einer Einbuchtung und die Deckfläche der zugehörigen Ausbuchtung bildet, laufstreifenaußenseitig von einer Randkante begrenzt ist, welche derart gebogen ist, dass sie sich ausgehend von ihren Enden in Richtung ihrer Mitte der Laufstreifenperipherie annähert. In diesem Zusammenhang ist es ferner vorteilhaft, wenn die Randkante, welche jeweils eine Schrägfläche laufstreifenaußenseitig begrenzt, an ihrer seichtesten Stelle zur Laufstreifenperiphere in radialer Richtung einen Mindestabstand von 15% bis 60%, insbesondere von 40% bis 50%, der Profiltiefe aufweist.

Gemäß einer weiteren bevorzugten Variante setzt sich die laufstreifenaußenseitige Rillenflanke im Bereich der Erstreckung einer Einbuchtung und der zugehörigen Ausbuchtung aus einer der Schrägflächen und einem zur Rillenkante verlaufenden, radial äußeren Flankenabschnitt zusammen, wobei der radial äußere Flankenabschnitt, im Querschnitt betrachtet, zur radialen Richtung unter einem konstanten Winkel verläuft. Ein solcher Flankenabschnitt trägt ebenfalls zur Stabilisierung der schulterseitigen Profilrippe bei.

Bevorzugter Weise beträgt der Winkel, unter welchem der radial äußere Flankenabschnitt zur radialen Richtung verläuft, 1° bis 5°.

Gemäß einer weiteren bevorzugten Ausführungsvariante sind an der laufstreifeninnenseitigen Rillenflanke der Umfangrille ebenfalls Ein- und Ausbuchtungen ausgebildet, sodass die beschriebenen Effekte, in entsprechend übertragener Weise, an einem weiteren in Umfangsrichtung umlaufenden Profilpositiv, beispielsweise ebenfalls einem Profilband oder einer Profilblockreihe, auftreten. Es ist dabei ferner bevorzugt, wenn die Ein- und Ausbuchtungen, welche an der laufstreifeinnseitigen Rillenflanke ausgebildet sind, zu den Ein- und Ausbuchtungen, welche an der laufstreifenaußenseitigen Rillenflanke ausgebildet sind, in Umfangsrichtung versetzt sind. Da die versetzte Ausbildung zu einem besonders gleichmäßigen Wasserfluss in die Umfangsrille über ihre gesamte Umfangserstreckung führt, ist diese Maßnahme insbesondere im Hinblick auf die Wasserdrainagevermögen der Umfangsrille von Vorteil.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen schulterseitigen Umfangsabschnitt eines Laufstreifens eines Fahrzeugluftreifens mit einer Ausführungsvariante gemäß der Erfindung,
Fig. 2 einen vergrößerten Schnitt entlang der Linie II-II der Fig. 1,
Fig. 3 einen vergrößerten Schnitt entlang der Linie III-III der Fig. 1 und
Fig. 4 eine Schrägansicht auf einen Detailbereich des schulterseitigen Umfangsabschnittes des Laufstreifens gemäß der in Fig. 1 durch den Pfeil S₁ angedeuteten Sichtrichtung.

Gemäß der Erfindung ausgeführte Fahrzeugluftreifen sind insbesondere Reifen in Radialbauart für Personenkraftwagen, Vans oder Light-Trucks.

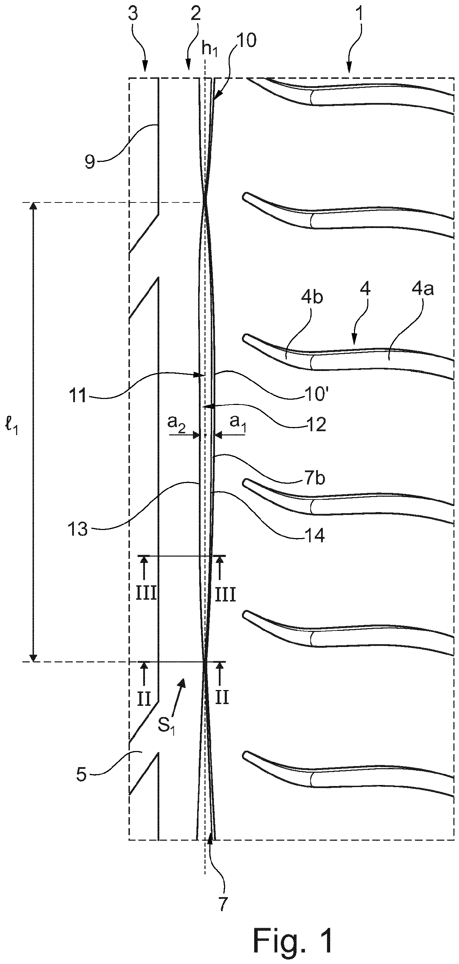

Fig. 1 zeigt ein schulterseitiges Profilband 1, welches durch eine Umfangsrille 2 von einem weiteren, in Fig. 1 lediglich angedeuteten, mittleren Profilpositiv 3, beispielsweise einem weiteren Profiband, getrennt ist. Das schulterseitige Profilband 1 ist mit einer Vielzahl von vor der Umfangsrille 2 endenden Querrillen 4 versehen, welche in bekannter Weise ausgeführt sein können und beim gezeigten Ausführungsbeispiel einen im Wesentlichen in axialer Richtung verlaufenden laufstreifenaußenseitigen Rillenabschnitt 4a und einen in Draufsicht leicht gebogen sowie zur axialen Richtung geneigt verlaufenden laufstreifeninnenseitigen Rillenabschnitt 4b aufweisen. Das mittlere Profilpositiv 3 ist beim gezeigten Ausführungsbeispiel mit Rillen 5 versehen, von welchen in Fig. 1 lediglich in die Umfangsrille 2 einmündende Endabschnitte zu sehen sind.

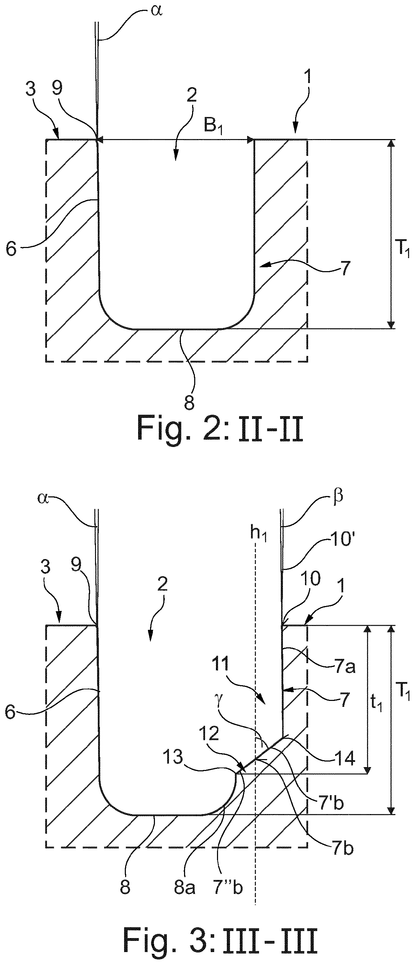

Gemäß Fig. 2 und Fig. 3, welche Querschnitte durch die Umfangsrille 2 an verschiedenen Stellen zeigen, ist die Umfangsrille 2 zum mittleren Profilpositiv 3 durch eine laufstreifeninnenseitige Rillenflanke 6, zum schulterseitigen Profilband 1 durch eine laufstreifenaußenseitige Rillenflanke 7 und durch einen zwischen den Rillenflanken 6, 7 verlaufenden, beim gezeigten Ausführungsbeispiel im Querschnitt flach-U-förmigen Rillengrund 8 begrenzt. Wie Fig. 1 zeigt, ist die Umfangsrille 2 an der Laufstreifenperipherie durch eine das mittlere Profilpositiv 3 entlangverlaufende, laufstreifeninnenseitige Rillenkante 9 und eine das schulterseitige Profilband 1 entlangverlaufende, laufstreifenaußenseitige Rillenkante 10 begrenzt. Die Umfangsrille 2 ist in radialer Richtung auf die jeweils vorgesehene Profiltiefe T₁ (Fig. 2, Fig. 3) ausgeführt, welche vorzugsweise 6,5 mm bis 10,0 mm beträgt.

Die laufstreifeninnenseitige Rillenflanke 6 verläuft, im Querschnitt betrachtet, zur radialen Richtung unter einem konstanten Winkel α (Fig. 2, Fig. 3) von beispielsweise 2° und endet an der laufstreifeninnenseitigen Rillenkante 9, welche beim gezeigten Ausführungsbeispiel in Umfangsrichtung verläuft (Fig. 1).

Zur Erläuterung der Ausgestaltung der laufstreifenaußenseitigen Rillenflanke 7 ist in Fig. 1 und in Fig. 3 eine Hilfsebene h₁ eingezeichnet, welche von der Umfangsrichtung und der Radialrichtung aufgespannt ist und welche in Fig. 1 und Fig. 3 jeweils einer Linie entspricht. In der laufstreifenaußenseitigen Rillenflanke 7 ist eine Vielzahl von in Umfangsrichtung langgestreckten sowie unmittelbar aufeinanderfolgenden, zur Laufstreifenperipherie offenen Einbuchtungen 11 ausgebildet, welche - bezogen auf die Hilfsebene h₁ - in das schulterseitige Profilband 1 hineinragen (Fig. 3). Zwischen zwei in Umfangsrichtung aufeinanderfolgenden Einbuchtungen 11 weist die Umfangsrille 2 an der Laufstreifenperipherie eine Breite B₁ (Fig. 2) von vorzugsweise 6,0 mm bis 13,0 mm auf.

Radial innerhalb jeder Einbuchtung 11 ist an der laufstreifenaußenseitigen Rillenflanke 7 eine an den Rillengrund 8 angrenzende Ausbuchtung 12 ausgebildet, welche gegenüber der Hilfsebene h₁ einen in die Umfangsrille 2 (Fig. 3) hineinragenden in Umfangsrichtung langgestreckten Vorsprung bildet. Die Einbuchtung 11 und die Ausbuchtung 12 weisen in Umfangsrichtung eine entlang der Hilfsebene h₁ ermittelte, übereinstimmende Erstreckungslänge l₁ (Fig. 1) von 60,0 mm bis 140,0 mm, insbesondere von 70,0 mm bis 120,0 mm, und besonders bevorzugter Weise von 75,0 mm bis 110,0 mm auf und enden beim gezeigten Ausführungsbeispiel im Wesentlichen an jenen Stellen, an welchen in Umfangsrichtung unmittelbar aufeinanderfolgenden Rillen 5 einmünden.

Wie Fig. 1 zeigt, ist jede Einbuchtung 11 an der Laufstreifenperipherie von einem in Draufsicht bogenförmig verlaufenden Kantenabschnitt 10` der laufstreifenaußenseitigen Rillenkante 10 begrenzt, sodass die Umfangsrille 2 an der Laufstreifenperipherie eine von den Enden des Kantenabschnittes 10` zur Mitte des Kantenabschnittes 10` kontinuierlich zunehmende Breite aufweist. Jeder Kantenabschnitt 10` weist gegenüber der Hilfsebene h₁ mittig eine maximale axiale Auslenkung a₁ von 1,0 mm bis 7,0 mm, insbesondere von bis zu 5,0 mm, auf.

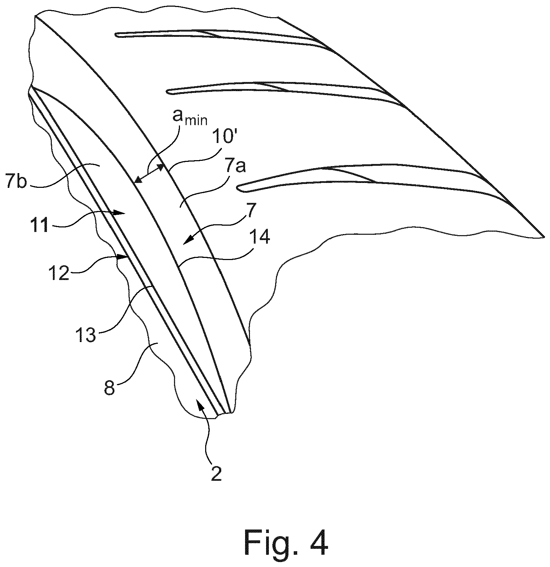

Gemäß Fig. 3 und Fig. 4 setzt sich die laufstreifenaußenseitige Rillenflanke 7 im Bereich jeder Einbuchtung 11 und der radial innerhalb dieser befindlichen Ausbuchtung 12 aus einem zum jeweiligen Kantenabschnitt 10' verlaufenden, radial äußeren Flankenabschnitt 7a und einer Schrägfläche 7b zusammen. Der Flankenabschnitt 7a verläuft - entsprechend des bogenförmig verlaufenden Kantenabschnittes 10' - in Draufsicht ebenfalls bogenförmig sowie, im Querschnitt betrachtet, zur radialen Richtung unter einem konstanten Winkel β (Fig. 3) von 1° bis 5°, beim Ausführungsbeispiel von 2°.

Wie Fig. 3 zeigt, fällt die Schrägfläche 7b in Richtung zur Mitte der Umfangsrille 2 ab, schneidet die Hilfsebene h₁ und verläuft, im Querschnitt betrachtet, zur radialen Richtung unter einem konstanten Winkel γ von 30° bis 60°, insbesondere von 40° bis 50°, und besonders bevorzugter Weise von 43° bis 47°. Wie insbesondere Fig. 4 zeigt, ist die Schrägfläche 7b rilleninnenseitig, d.h. zum Rillengrund 8 der Umfangsrille 2, durch eine freie Kante 13 und rillenaußenseitig, d.h. zum Flankenabschnitt 7a, durch eine Randkante 14 begrenzt, wobei die freie Kante 13 und die Randkante 14 an ihren Enden zusammenlaufen. Die freie Kante 13 verläuft in einer in radialer Richtung gemessenen konstanten Tiefe t₁ (Fig. 3) von 60% bis 90%, insbesondere von mindestens 75%, der Profiltiefe T₁ (Fig. 3) und ist, wie Fig. 1 zeigt, in Draufsicht in entgegengesetzter Richtung zum Kantenabschnitt 10` gekrümmt und weist gegenüber der Hilfsebene h₁ mittig eine maximal axiale Auslenkung a₂ von 1,0 mm bis 7,0 mm, insbesondere von bis zu 5,0 mm, auf. Die Randkante 14 verläuft in Draufsicht zumindest im Wesentlichen parallel zum Kantenabschnitt 10' (Fig. 1) und ist, wie Fig. 4 zeigt, insgesamt derart gebogen, dass sie sich ausgehend von ihren in der erwähnten Tiefe t₁ liegenden Enden (siehe Fig. 3 in Verbindung mit Fig. 4) in Richtung ihrer Mitte der Laufstreifenperipherie annähert. Bevorzugter Weise sind die Ausgestaltungen der Einbuchtungen 11 und Ausbuchtungen 12 derart aufeinander abgestimmt, dass ein an der seichtesten Stelle der Randkante 14 zur Laufstreifenperiphere in radialer Richtung ermittelter Mindestabstand aₘᵢₙ (in Fig. 4 lediglich schematisch angedeutet) 15% bis 60%, insbesondere von 40% bis 50%, der Profiltiefe T₁ (Fig. 3) beträgt.

Wie Fig. 3 zeigt, setzt sich die Schrägfläche 7b aus einer den Boden der Einbuchtung 11 bildenden, an die Randkante 14 angrenzenden Teilfläche 7'b und einer die Deckfläche der Ausbuchtung 12 bildenden, an die freie Kante 13 angrenzenden Teilfläche 7"b zusammen, wobei die Teilung der Schrägfläche 7b in die Teilflächen 7'b und 7"b an der Hilfsebene h₁ erfolgt. Jede Einbuchtung 11 ist daher von einem Flankenabschnitt 7a und der an diesen unmittelbar anschließenden, den Boden der Einbuchtung 11 bildenden Teilfläche 7'b begrenzt bzw. gebildet. Jede Ausbuchtung 12 ist in radialer Richtung von der die Deckfläche der Ausbuchtung 12 bildenden Teilfläche 7"b und rilleninnenseitig von einem randseitigen, entsprechend der flachen U-Form der Rillengrundes 8 gebogenen Grundabschnitt 8a begrenzt.

Die Erfindung ist auf die beschriebene Ausführungsvariante nicht beschränkt.

Insbesondere können beide Rillenflanken der Umfangsrille mit Einbuchtungen und Ausbuchtungen versehen sein, wobei die Ein- und Ausbuchtungen durch in die Umfangsrille einmündende Rillen oder Einschnitte abschnittsweise unterbrochen sein können. Bevorzugter Weise sind die Ein- und Ausbuchtungen an der einen Rillenflanke gegenüber den Ein- und Ausbuchtungen an der anderen Rillenflanke in Umfangsrichtung versetzt, insbesondere um 50% der mittleren Erstreckungslänge der Ein- und Ausbuchtungen. Ferner können die Ein- und Ausbuchtungen zusätzlich auch bei Umfangsrillen vorgesehen sein, welche mittlere Profilpositive, beispielsweise zwei in Umfangsrichtung umlaufende Profilbänder oder Profilblockreihen, voneinander trennen.

### Bezugsziffernliste

- 1: Profilband
- 2: Umfangsrille
- 3: Profilpositiv
- 4: Querrille
- 4a: laufstreifenaußenseitiger Rillenabschnitt
- 4b: laufstreifeninnenseitiger Rillenabschnitt
- 5: Rillen
- 6: laufstreifeninnenseitige Rillenflanke
- 7: laufstreifenaußenseitige Rillenflanke
- 7a: radial äußerer Flankenabschnitt
- 7b: Schrägfläche
- 7'b, 7"b: Teilfläche
- 8: Rillengrund
- 8a: Grundabschnitt
- 9: laufstreifeninnenseitige Rillenkante
- 10: laufstreifenaußenseitige Rillenkante
- 10': Kantenabschnitt
- 11: Einbuchtung
- 12: Ausbuchtung
- 13: freie Kante
- 14: Randkante
- a₁, a₂: maximale Auslenkung
- B₁: Breite
- h₁: Hilfsebene
- l₁: Erstreckungslänge
- S₁: Pfeil (Sichtrichtung)
- T₁: Profiltiefe
- α, β, γ: Winkel

## Patentansprüche

1. Fahrzeugluftreifen mit einem Laufstreifen mit zumindest einem von einer Umfangsrille (2) begrenzten schulterseitigen Profilband (1), in welchem vor der Umfangsrille (2) endende Querrillen (4) ausgebildet sind,
wobei die Umfangsrille (2) einen Rillengrund (8) aufweist und zum schulterseitigen Profilband (1) durch eine laufstreifenaußenseitige Rillenflanke (7) und eine das schulterseitige Profilband (1) entlangverlaufende Rillenkante (10) begrenzt ist, wobei die Rillenkante (10) gemeinsam mit der laufstreifenaußenseitigen Rillenflanke (7) im schulterseitigen Profilband (1) in Umfangsrichtung langgestreckte und aufeinanderfolgende Einbuchtungen (11) bildet und wobei die Rillenkante (10) an den Einbuchtungen (11) und in das Profilband (1) hinein eine maximale axiale Auslenkung (a₁) von 1,0 mm bis 7,0 mm aufweist,
wobei an der laufstreifenaußenseitigen Rillenflanke (7) radial innerhalb jeder Einbuchtung (11) eine an den Rillengrund (8) angrenzende zugehörige Ausbuchtung (12) ausgebildet ist, wobei die laufstreifenaußenseitige Rillenflanke (7) in Richtung zur Mitte der Umfangsrille (2) abfallende Schrägflächen (7b) aufweist, welche jeweils gleichzeitig den Boden einer Einbuchtung (11) und die Deckfläche der zugehörigen Ausbuchtung (12) bilden,
**dadurch gekennzeichnet,**
**dass** jede Schrägfläche (7b), welche den Boden einer Einbuchtung (11) und die Deckfläche der zugehörigen Ausbuchtung (12) bildet, zu ihren in Umfangsrichtung liegenden Enden kontinuierlich schmäler wird, sodass die Schrägfläche (7b) gemeinsam mit der Einbuchtung (11) und der Ausbuchtung (12) ausläuft.

2. Fahrzeugluftreifen nach Anspruch 1, **dadurch gekennzeichnet, dass** jede Schrägfläche (7b), welche den Boden einer Einbuchtung (11) und die Deckfläche der zugehörigen Ausbuchtung (12) bildet, im Querschnitt betrachtet, zur radialen Richtung unter einem konstanten Winkel (γ) von 30° bis 60°, insbesondere von 40° bis 50°, und besonders bevorzugter Weise von 43° bis 47° verläuft.

3. Fahrzeugluftreifen nach einem der Ansprüche 1 bis 2, **dadurch gekennzeichnet, dass** die maximale axiale Auslenkung (a₁), welche die Rillenkante (10) an den Einbuchtungen (11) in das Profilband (1) hinein aufweist, bis zu 5,0 mm beträgt.

4. Fahrzeugluftreifen nach einem der Ansprüche 1 bis 3, **dadurch gekennzeichnet, dass** jede Schrägfläche (7b), welche den Boden einer Einbuchtung (11) und die Deckfläche der zugehörigen Ausbuchtung (12) bildet, rilleninnenseitig durch eine Kante (13) begrenzt ist, welche in radialer Richtung in einer konstanten Tiefe (t₁) von 60% bis 90%, insbesondere von mindestens 75%, der Profiltiefe (T₁) verläuft.

5. Fahrzeugluftreifen nach Anspruch 4, **dadurch gekennzeichnet, dass** die Kante (13), welche jeweils eine Schrägfläche (7b) rilleninnenseitig begrenzt, bezogen auf eine durch ihre Enden verlaufende, von der Umfangsrichtung und der Radialrichtung aufgespannten Hilfsebene (h₁), in die Umfangsrille (2) hinein eine maximale axiale Auslenkung (a₂) von 1,0 mm bis 7,0 mm, vorzugsweise von bis zu 5,0 mm, aufweist.

6. Fahrzeugluftreifen nach einem der Ansprüche 1 bis 5, **dadurch gekennzeichnet, dass** die Einbuchtung (11) und die zugehörige Ausbuchtung (12) in Umfangsrichtung übereinstimmende Erstreckungslängen (l₁) von 60,0 mm bis 140,0 mm, insbesondere von 70,0 mm bis 120,0 mm, und besonders bevorzugter Weise von 75,0 mm bis 110,0 mm aufweisen.

7. Fahrzeugluftreifen nach einem der Ansprüche 1 bis 6, **dadurch gekennzeichnet, dass** jede Schrägfläche (7b), welche den Boden einer Einbuchtung (11) und die Deckfläche der zugehörigen Ausbuchtung (12) bildet, laufstreifenaußenseitig von einer Randkante (14) begrenzt ist, welche derart gebogen ist, dass sie sich ausgehend von ihren Enden in Richtung ihrer Mitte der Laufstreifenperipherie annähert.

8. Fahrzeugluftreifen nach Anspruch 7, **dadurch gekennzeichnet, dass** die Randkante (14), welche jeweils eine Schrägfläche (7b) laufstreifenaußenseitig begrenzt, an ihrer seichtesten Stelle zur Laufstreifenperiphere in radialer Richtung einen Mindestabstand (aₘᵢₙ) von 15% bis 60%, insbesondere von 40% bis 50%, der Profiltiefe (T₁) aufweist.

9. Fahrzeugluftreifen nach einem der Ansprüche 1 bis 8, **dadurch gekennzeichnet, dass** sich die laufstreifenaußenseitige Rillenflanke (7) im Bereich der Erstreckung einer Einbuchtung (11) und der zugehörigen Ausbuchtung (12) aus einer der Schrägflächen (7b) und einem zur Rillenkante (10) verlaufenden, radial äußeren Flankenabschnitt (7a) zusammensetzt, wobei der radial äußere Flankenabschnitt (7a), im Querschnitt betrachtet, zur radialen Richtung unter einem konstanten Winkel (β) verläuft.

10. Fahrzeugluftreifen nach Anspruch 9 **dadurch gekennzeichnet, dass** der Winkel (β), unter welchem der radial äußere Flankenabschnitt (7a) zur radialen Richtung verläuft, 1° bis 5° beträgt.

11. Fahrzeugluftreifen nach einem der Ansprüche 1 bis 10, **dadurch gekennzeichnet, dass** an der laufstreifeninnenseitigen Rillenflanke (6) der Umfangsrille (2) ebenfalls Ein (11)- und Ausbuchtungen (12) ausgebildet sind.

12. Fahrzeugluftreifen nach Anspruch 11, **dadurch gekennzeichnet, dass** die Ein (11)- und Ausbuchtungen (12), welche an der laufstreifeinnseitigen Rillenflanke (6) ausgebildet sind, zu den Ein (11)- und Ausbuchtungen (12), welche an der laufstreifenaußenseitigen Rillenflanke (7) ausgebildet sind, in Umfangsrichtung versetzt sind.

## Claims

1. Pneumatic vehicle tyre having a tread with at least one shoulder-side profile band (1) which is delimited by a circumferential groove (2) and in which transverse grooves (4) that end before the circumferential groove (2) are formed,
wherein the circumferential groove (2) has a groove base (8) and is delimited, with respect to the shoulder-side profile band (1), by a groove flank (7) at the outside of the tread and a groove edge (10) running along the shoulder-side profile band (1), wherein the groove edge (10), together with the groove flank (7) at the outside of the tread, forms indentations (11) which are elongated and which follow one after the other in a circumferential direction in the shoulder-side profile band (1) and wherein the groove edge (10) has, at the indentations (11) and into the profile band (1), a maximum axial deflection (a₁) of 1.0 mm to 7.0 mm,
wherein an associated bulge (12) adjoining the groove base (8) is formed on the groove flank (7) at the outside of the tread radially within each indentation (11), wherein the groove flank (7) at the outside of the tread has oblique surfaces (7b) which slope downwards in the direction of the centre of the circumferential groove (2) and which each simultaneously form the bottom of an indentation (11) and the top surface of the associated bulge (12),
**characterized**
**in that** each oblique surface (7b), which forms the bottom of an indentation (11) and the top surface of the associated bulge (12), becomes continuously narrower towards the ends thereof lying in the circumferential direction, such that the oblique surface (7b) runs out together with the indentation (11) and the bulge (12).

2. Pneumatic vehicle tyre according to Claim 1, **characterized in that** each oblique surface (7b), which forms the bottom of an indentation (11) and the top surface of the associated bulge (12), viewed in cross section, runs at a constant angle (γ) of 30° to 60°, in particular of 40° to 50°, and particularly preferably of 43° to 47°, with respect to the radial direction.

3. Pneumatic vehicle tyre according to either of Claims 1 and 2, **characterized in that** the maximum axial deflection (a₁) which the groove edge (10) has at the indentations (11) into the profile band (1) is up to 5.0 mm.

4. Pneumatic vehicle tyre according to one of Claims 1 to 3, **characterized in that** each oblique surface (7b), which forms the bottom of an indentation (11) and the top surface of the associated bulge (12), is delimited at the inside of the groove by an edge (13) which runs at a constant depth (t₁) of 60% to 90%, in particular of at least 75%, of the profile depth (T₁) in the radial direction.

5. Pneumatic vehicle tyre according to Claim 4, **characterized in that** the edge (13), which in each case delimits an oblique surface (7b) at the inside of the groove, has, in relation to an auxiliary plane (h₁) which runs through the ends thereof and which is spanned by the circumferential direction and the radial direction, a maximum axial deflection (a₂) of 1.0 mm to 7.0 mm, preferably of up to 5.0 mm, into the circumferential groove (2).

6. Pneumatic vehicle tyre according to one of Claims 1 to 5, **characterized in that** the indentation (11) and the associated bulge (12) have extent lengths (l₁) of 60.0 mm to 140.0 mm, in particular of 70.0 mm 120.0 mm, and particularly preferably of 75.0 mm to 110.0 mm, which correspond in the circumferential direction.

7. Pneumatic vehicle tyre according to one of Claims 1 to 6, **characterized in that** each oblique surface (7b), which forms the bottom of an indentation (11) and the top surface of the associated bulge (12), is delimited at the outside of the tread by a peripheral edge (14) which is curved in such a way that it approximates, proceeding from the ends thereof in the direction of the centre thereof, the tread periphery.

8. Pneumatic vehicle tyre according to Claim 7, **characterized in that** the peripheral edge (14), which in each case delimits an oblique surface (7b) at the outside of the tread, has, at the shallowest point thereof, a minimum spacing (aₘᵢₙ) of 15% to 60%, in particular of 40% to 50%, of the profile depth (T₁) to the tread periphery in the radial direction.

9. Pneumatic vehicle tyre according to one of Claims 1 to 8, **characterized in that** the groove flank (7) at the outside of the tread is composed, in the region of the extent of an indentation (11) and of the associated bulge (12), of one of the oblique surfaces (7b) and a radially outer flank portion (7a) running towards the groove edge (10), wherein the radially outer flank portion (7a), viewed in cross section, runs at a constant angle (β) with respect to the radial direction.

10. Pneumatic vehicle tyre according to Claim 9, **characterized in that** the angle (β) at which the radially outer flank portion (7a) runs with respect to the radial direction is 1° to 5°.

11. Pneumatic vehicle tyre according to one of Claims 1 to 10, **characterized in that** indentations (11) and bulges (12) are also formed on that groove flank (6) of the circumferential groove (2) which is at the inside of the tread.

12. Pneumatic vehicle tyre according to Claim 11, **characterized in that** the indentations (11) and bulges (12) which are formed on the groove flank (6) at the inside of the tread are offset in the circumferential direction with respect to the indentations (11) and bulges (12) which are formed on the groove flank (7) at the outside of the tread.

## Revendications

1. Pneumatique de véhicule avec une bande de roulement avec au moins une bande profilée (1) du côté de l'épaulement délimitée par une rainure circonférentielle (2), dans laquelle sont réalisées des rainures transversales (4) se terminant avant la rainure circonférentielle (2),
la rainure circonférentielle (2) présentant un fond de rainure (8) et étant délimitée par rapport à la bande profilée (1) du côté de l'épaulement par un flanc de rainure (7) du côté extérieur de la bande de roulement et une arête de rainure (10) s'étendant le long de la bande profilée (1) du côté de l'épaulement, l'arête de rainure (10) formant, conjointement avec le flanc de rainure (7) du côté extérieur de la bande de roulement, dans la bande profilée (1) du côté de l'épaulement, des renfoncements (11) allongés et successifs dans la direction circonférentielle, et l'arête de rainure (10) présentant, au niveau des renfoncements (11) et dans la bande profilée (1), une déviation axiale maximale (a₁) de 1,0 mm à 7,0 mm,
au niveau du flanc de rainure (7) du côté extérieur de la bande de roulement étant réalisé radialement à l'intérieur de chaque renfoncement (11) un renflement (12) correspondant adjacent au fond de rainure (8), le flanc de rainure (7) du côté extérieur de la bande de roulement présentant des surfaces obliques (7b) descendant en direction du centre de la rainure circonférentielle (2), qui forment respectivement en même temps le fond d'un renfoncement (11) et la surface de recouvrement du renflement (12) correspondant,
**caractérisé en ce que**
chaque surface oblique (7b) qui forme le fond d'un renfoncement (11) et la surface de recouvrement du renflement (12) associé se rétrécit de manière continue vers ses extrémités situées dans la direction circonférentielle, de telle sorte que la surface oblique (7b) se termine en même temps que le renfoncement (11) et le renflement (12).

2. Pneumatique de véhicule selon la revendication 1, **caractérisé en ce que** chaque surface oblique (7b), qui forme le fond d'un renfoncement (11) et la surface de recouvrement du renflement (12) correspondant, considérée en coupe transversale, s'étend par rapport à la direction radiale selon un angle (γ) constant de 30° à 60°, notamment de 40° à 50°, et de manière particulièrement préférée de 43° à 47°.

3. Pneumatique de véhicule selon l'une quelconque des revendications 1 à 2, **caractérisé en ce que** la déviation axiale maximale (a₁) que présente l'arête de rainure (10) au niveau des renfoncements (11) dans la bande profilée (1) est de jusqu'à 5,0 mm.

4. Pneumatique de véhicule selon l'une quelconque des revendications 1 à 3, **caractérisé en ce que** chaque surface oblique (7b), qui forme le fond d'un renfoncement (11) et la surface de recouvrement du renflement (12) correspondant, est délimitée du côté intérieur de la rainure par une arête (13) qui s'étend dans la direction radiale à une profondeur (t₁) constante de 60 % à 90 %, notamment d'au moins 75 %, de la profondeur de profilé (T₁).

5. Pneumatique de véhicule selon la revendication 4, **caractérisé en ce que** l'arête (13), qui délimite respectivement une surface oblique (7b) du côté intérieur de la rainure présente, par rapport à un plan auxiliaire (h₁) passant par ses extrémités, défini par la direction circonférentielle et la direction radiale, une déviation axiale maximale (a₂) de 1,0 mm à 7,0 mm, de préférence de jusqu'à 5,0 mm, dans la rainure circonférentielle (2).

6. Pneumatique de véhicule selon l'une quelconque des revendications 1 à 5, **caractérisé en ce que** le renfoncement (11) et le renflement (12) correspondant présentent des longueurs d'extension (l₁) coïncidant dans la direction circonférentielle de 60,0 mm à 140,0 mm, notamment de 70,0 mm à 120,0 mm, et de manière particulièrement préférée de 75,0 mm à 110,0 mm.

7. Pneumatique de véhicule selon l'une quelconque des revendications 1 à 6, **caractérisé en ce que** chaque surface oblique (7b), qui forme le fond d'un renfoncement (11) et la surface de recouvrement du renflement (12) correspondant, est délimitée du côté extérieur de la bande de roulement par une arête de bord (14) qui est courbée de telle sorte qu'elle s'approche de la périphérie de la bande de roulement à partir de ses extrémités en direction de son centre.

8. Pneumatique de véhicule selon la revendication 7, **caractérisé en ce que** l'arête de bord (14), qui délimite respectivement une surface oblique (7b) du côté extérieur de la bande de roulement présente, à son emplacement le moins profond par rapport à la périphérie de la bande de roulement dans la direction radiale, une distance minimale (aₘᵢₙ) de 15 % à 60 %, notamment de 40 % à 50 %, de la profondeur de profilé (T₁).

9. Pneumatique de véhicule selon l'une quelconque des revendications 1 à 8, **caractérisé en ce que** le flanc de rainure (7) du côté extérieur de la bande de roulement se compose, dans la zone de l'extension d'un renfoncement (11) et du renflement (12) correspondant, d'une des surfaces obliques (7b) et d'une section de flanc radialement extérieure (7a) s'étendant vers l'arête de rainure (10), la section de flanc radialement extérieure (7a), considérée en coupe transversale, s'étendant par rapport à la direction radiale selon un angle (β) constant.

10. Pneumatique de véhicule selon la revendication 9, **caractérisé en ce que** l'angle (β) selon lequel la section de flanc radialement extérieure (7a) s'étend par rapport à la direction radiale est de 1 ° à 5°.

11. Pneumatique de véhicule selon l'une quelconque des revendications 1 à 10, **caractérisé en ce que** des renfoncements (11) et des renflements (12) sont également réalisés sur le flanc de rainure (6) de la rainure circonférentielle (2) du côté intérieur de la bande de roulement.

12. Pneumatique de véhicule selon la revendication 11, **caractérisé en ce que** les renfoncements (11) et les renflements (12) qui sont réalisés sur le flanc de rainure (6) du côté intérieur de la bande de roulement sont décalés dans la direction circonférentielle par rapport aux renfoncements (11) et aux renflements (12) qui sont réalisés sur le flanc de rainure (7) du côté extérieur de la bande de roulement.
